# EUROPÄISCHE PATENTANMELDUNG

(11) **EP 2 019 365 A2**
(43) Veröffentlichungstag der Anmeldung: **28.01.2009**
(21) Anmeldenummer: 08104808.4
(22) Anmeldetag: 21.07.2008
(51) Int. Cl.: G06F 21/20

(54) **System und Verfahren zur sicheren Eingabe einer PIN**

(30) Priorität: 24.07.2007 DE 102007034346
(71) Anmelder: Cherry GmbH, 91275 Auerbach (DE)
(72) Erfinder: Dreßel, Horst, 91235, Velden (DE); Zapf, Thomas, 91257, Pegnitz (DE); Dorn, Manfred, 90480, Nürnberg (DE); Pickelmann, Hans, 92259, Neukirchen (DE)
(74) Vertreter: Molnia, David

(57) **Zusammenfassung**

Die Erfindung bezieht sich auf ein System und ein Verfahren zur sicheren Eingabe einer PIN auf einem Chipkartenleser ohne eigenes Display, der mit einem Computersystem verbunden ist. Nach dem Anfordern einer PIN-Eingabe durch eine Anwendung informiert der Chipkartenleser ein PIN-Eingabeprogramm auf dem Computersystem, das den Benutzer durch den Vorgang der PIN-Eingabe führt.

## Beschreibung

Die Erfindung bezieht sich auf ein System und ein Verfahren zur sicheren Eingabe eines Codes, insbesondere einer persönlichen Identifikationsnummer (PIN), auf einem Computersystem.

Eine persönliche Identifikationsnummer (PIN) oder Geheimzahl ist eine nur einer oder wenigen Personen bekannte Zahl, mit der diese sich gegenüber einer Maschine authentifizieren können.

Eine häufige Anwendung für PINs ist die Authentifizierung an einem Geldautomaten. Hier ist die Eingabe einer vierstelligen Zahl nötig, um einen Kontozugriff durch unbefugte Personen zu verhindern. Auch kann man mit der Bankkarte und der zugehörigen PIN in vielen Geschäften bargeldlos zahlen.

Auch für das Internetbanking ist zumeist eine PIN nötig. Mit dieser PIN und den Kontodaten kann man sich sein Konto, den Kontostand und die letzten Buchungen ansehen. Mit einer Transaktionsnummer (TAN) kann man dann eine Überweisung tätigen oder andere Bankgeschäfte abwickeln.

Ein neueres Verfahren zum Authentifizieren beim Internetbanking stellt ein Verfahren unter Verwendung des Homebanking Computer Interfaces (HBCI) dar. Bei diesem benötigt der Benutzer eine HBCI-Chipkarte und einen Chipkartenleser, der an den Computer, von dem aus das Internetbanking durchgeführt werden soll, angeschlossen ist.

Da die Eingabe der PIN nicht über die Tastatur des Computers, sondern direkt am Chipkartenleser erfolgt, kann bei diesem Verfahren weder der kryptographische Schlüssel der Karte ausgelesen werden, noch ist das Belauschen der PIN-Eingabe mit einem Keylogger oder Trojaner möglich. Phishing ist bei diesem Verfahren ebenfalls prinzipiell nicht möglich, da man zum erfolgreichen Ausführen einer Transaktion im Besitz der elektronischen Signatur sein muss, also die Chipkarte besitzen muss.

Auch in anderen Bereichen kommt die Authentifizierung des Benutzers mittels Chipkarte und dazugehöriger PIN zum Einsatz. Ein Beispiel hierfür ist die elektronische Steuererklärung mittels ELSTER, bei der die Authentifizierung mittels Chipkarte möglich ist.

Chipkartenleser, die an einen Computer angeschlossen werden können, werden in vier Sicherheitsklassen eingeteilt, abhängig von den Sicherheitsmerkmalen, die sie bereitstellen. Gemäß einer Spezifikation des Zentralen Kreditausschusses (ZKA) gibt es folgende Stufen:
Sicherheitsklasse 1: Geräte dieser Klasse haben keine besonderen Sicherheitsmerkmale. Der Kartenleser dient nur als Kontaktiereinheit für die Chipkarte.

Sicherheitsklasse 2: Diese Chipkartenleser besitzen eine Tastatur, über die zum Beispiel die PIN fürs Homebanking direkt eingegeben werden kann. Dadurch wird das Ausspähen der PIN (zum Beispiel durch Keylogger oder Trojaner) praktisch ausgeschlossen.

Sicherheitsklasse 3: Zusätzlich zur Tastatur haben diese Geräte ein Display und die Möglichkeit Zusatzanwendungen nachzuladen.

Sicherheitsklasse 4: Diese Geräte besitzen ferner ein Sicherheitsmodul mit RSA-Verschlüsselung.

Üblicherweise werden für die oben genannten Anwendungen Chipkartenleser der Sicherheitsklasse 2 verwendet, die kein eigenes Display aufweisen und somit für die Kommunikation mit dem Benutzer auf den Computerbildschirm angewiesen sind. Dabei kommen im Wesentlichen folgende Verfahren zur sicheren Eingabe einer PIN zum Einsatz.

Bei der Eingabe über die PC/SC-Schnittstelle (*personal computer smartcard*) kann zum einen die VERIFY_PIN_DIRECT-Funktion verwendet werden. Nach Aufruf dieser Funktion erfolgt die Eingabe und die Verifikation der PIN auf dem Chipkartenleser bzw. auf der Chipkarte, ohne dass eine Kommunikation zwischen dem Chipkartenleser und dem Computer stattfindet.

Die Anwendung, die die VERIFY_PIN_DIRECT-Funktion aufgerufen hat, erhält eine Rückmeldung somit erst nach Beendigung des Eingabe- und Verifikationsvorgangs. Außerdem erhält der Benutzer keinen geführten Dialog auf dem Computerbildschirm.

Die Eingabe über die PC/SC-Schnittstelle kann auch mittels der Funktionen VERIFY_PIN_START und VERIFY_PIN_FINISH erfolgen. Diese Funktionen werden dann verwendet, wenn die auf dem Computer laufende Anwendung selbst einen Dialog zur Eingabe der PIN darstellen soll oder wenn die Anwendung eine Rückmeldung über die gedrückten Tasten benötigt. Die Anwendung, die diese Funktionen aufruft, kann somit eine Rückmeldung z.B. darüber erhalten, ob schon die erforderliche Anzahl von Ziffern auf der Tastatur des Chipkartenlesers eingegeben wurde.

Allerdings ist dieses Verfahren schwieriger zu implementieren als das oben genannte Verfahren unter Verwendung der VERIFY_PIN_DIRECT-Funktion. Der Anwendungsentwickler muss den Dialog zur Eingabe der PIN selbst entwickeln, was zur Folge hat, dass dieser in unterschiedlichen Anwendungen auch unterschiedlich aussieht und der Benutzer sich erst an die unterschiedlichen Dialoge gewöhnen muss. Insbesondere seit den zunehmenden Betrugsversuchen beim Internetbanking wird ein Benutzer skeptisch sein, wenn beispielsweise nach einem Update eines Programms der Dialog zur PIN-Eingabe verändert ist.

Anstelle über die PC/SC-Schnittstelle kann die Eingabe einer PIN auch mittels eines Secure PIN Entry Serviceproviders erfolgen, der vom Hersteller des Chipkartenlesers bereitgestellt wird. Der Serviceprovider gibt dann einen Dialog auf dem Computerbildschirm aus, der von der Anwendung, die eine PIN-Eingabe benötigt, unabhängig ist.

Allerdings ist der Serviceprovider somit herstellerspezifisch und die Entwickler von Anwendungen müssen berücksichtigen, dass alle Serviceprovider aller Hersteller von Chipkartenlesern von der Anwendung unterstützt werden.

Es ist somit die Aufgabe der vorliegenden Erfindung, eine Möglichkeit für die sichere Eingabe einer PIN bereitzustellen, die die oben genannten Nachteile des Standes der Technik vermeidet.

Diese Aufgabe wird durch ein System und ein Verfahren zur sicheren Eingabe einer PIN gemäß der vorliegenden Erfindung gelöst.

Ein System zur sicheren Eingabe einer PIN gemäß der vorliegenden Erfindung weist eine Kartenleseeinrichtung und ein PIN-Eingabeprogramm zur Ausführung auf einem Computersystem auf. Die Kartenleseeinrichtung kann ein Chipkartenleser mit numerischer Tastatur aber ohne Display sein, entsprechend der oben erwähnten Sicherheitsstufe 2. Aber auch Kartenleseeinrichtungen mit einem integrierten Display (d.h. Kartenleseeinrichtungen der Sicherheitsklasse 3) können verwendet werden, wobei dann die Kommunikation mit dem Benutzer nicht über das Display der Kartenleseeinrichtung erfolgt, sondern über den Bildschirm eines Computersystems, an das die Kartenleseeinrichtung angeschlossen wird.

Die Kommunikation mit dem Benutzer wird durch das PIN-Eingabeprogramm gesteuert, das auf dem Computersystem, an das die Kartenleseeinrichtung angeschlossen wird, ausführbar ist. Das PIN-Eingabeprogramm kann den Benutzer beispielsweise darauf hinweisen, wie viele Ziffern der PIN er bereits eingegeben hat, sodass der Benutzer weiß, ob seine bisherigen Eingaben erkannt wurden und welche Ziffer er als nächstes eingeben muss.

Die Kartenleseeinrichtung gemäß dem erfindungsgemäßen System zur sicheren Eingabe einer PIN weist Mittel zum Informieren des PIN-Eingabeprogramms auf dem Computersystem auf. Somit erfolgt ein Informieren des PIN-Eingabeprogramms nicht unmittelbar durch eine Anwendung, die auf dem Computersystem ausgeführt wird, sondern mittelbar über die Kartenleseeinrichtung, wenn die Anwendung, die eine PIN-Eingabe erfordert, diese von der Kartenleseeinrichtung anfordert.

Unter Informieren eines Programms oder eines Devices wird im Rahmen der vorliegenden Erfindung das Übermitteln von Daten an das Programm bzw. das Device verstanden. Wenn das Programm, das informiert werden soll, nicht läuft, so beinhaltet der Begriff Informieren auch das Starten des Programms. Beispiele für Informieren im Sinne der vorliegenden Erfindung sind das Initialisieren eines Programms durch das Übermitteln entsprechender Befehle und das Übermitteln von Nutzdaten, wie z.B. welche Taste gedrückt wurde.

Die Anwendung kann sich somit darauf beschränken, über ein herkömmliches Verfahren, wie beispielsweise die oben genannte, leicht zu implementierende VERIFY_PIN_DIRECT-Funktion eine PIN-Eingabe von der Kartenleseeinrichtung anzufordern. Es ist nicht erforderlich, dass die Anwendung beispielsweise an herstellerspezifische Serviceprovider angepasst wird.

Trotzdem erhält der Benutzer, anders als bei dem herkömmlichen Verfahren, das mit einem Aufruf der VERIFY_PIN_DIRECT-Funktion funktioniert, eine Rückmeldung durch das PIN-Eingabeprogramm und kann von diesem durch die PIN-Eingabe geführt werden.

Es ist ein weiterer Vorteil der vorliegenden Erfindung, dass ein Benutzer, der eine erfindungsgemäße Kartenleseeinrichtung an ein Computersystem anschließt, keinen hersteller- oder gerätespezifischen Treiber auf dem Computersystem installieren muss, wofür üblicherweise Administratorrechte auf dem Computersystem benötigt werden. Das erfindungsgemäße PIN-Eingabeprogramm ist hingegen eine normale Anwendung, die so gestaltet werden kann, dass zu ihrer Installation Administratorrechte auf dem Computersystem nicht benötigt werden, sondern eingeschränkte Benutzerrechte ausreichen.

Wenn das PIN-Eingabeprogramm in einer betriebssystemunabhängigen Programmiersprache (wie beispielsweise JAVA) geschrieben ist, kann das erfindungsgemäße System zur sicheren Eingabe einer PIN auch unter verschiedenen Betriebssystem genutzt werden, ohne dass betriebssystemspezifische Treiber erforderlich sind.

Außerdem wird die Systemstabilität nicht durch herstellerspezifische Treiber beeinträchtigt, die auf dem Computersystem im Kernelmode laufen. Das erfindungsgemäße PIN-Eingabeprogramm hingegen läuft als normale Anwendung im Usermode.

In einer bevorzugten Ausführungsform des erfindungsgemäßen Systems weist die Kartenleseeinrichtung ein CCID-Device auf und die Mittel zum Informieren des PIN-Eingabeprogramms auf dem Computersystem weisen ein HID-Device auf.

Ein CCID-Device (*chip card interface device*) ist dabei eine (physikalische und/oder logische) Einheit der Kartenleseeinrichtung, die mittels eines auf dem Computersystem vorhandenen CCID-Treibers mit dem Computersystem kommunizieren kann. Die Geräteklasse der CCID-Devices umfasst Kartenleseeinrichtungen der verschiedenen oben genannten Sicherheitsklassen. CCID-Treiber werden von allen modernen Betriebssystemen (beispielsweise Linux und Microsoft Windows) bereitgestellt. Eine zusätzliche Treiberinstallation ist daher nicht erforderlich.

Ein HID-Device (*human interface device*) ist eine (physikalische und/oder logische) Einheit der Kartenleseeinrichtung, die mittels eines auf dem Computersystem vorhandenen HID-Treibers mit dem Computersystem kommunizieren kann. HID-Devices gehören zu einer Klasse von Geräten, die direkt mit dem Benutzer interagieren wie beispielsweise Tastaturen und Mäuse. HID-Treiber werden von allen modernen Betriebssystemen (beispielsweise Linux und Microsoft Windows) bereitgestellt. Eine zusätzliche Treiberinstallation ist daher nicht erforderlich.

Anstelle des CCID-Treibers und des HID-Treibers können auch andere Geräteklassentreiber, die herstellerspezifischen Datentransfer unterstützen, in einem System gemäß der vorliegenden Erfindung zum Einsatz kommen.

In einer weiteren bevorzugten Ausführungsform des erfindungsgemäßen Systems weist die Kartenleseeinrichtung weiter Mittel zum Informieren des HID-Devices durch das CCID-Device auf.

In einer weiteren bevorzugten Ausführungsform des erfindungsgemäßen Systems weist die Kartenleseeinrichtung eine Mehrzahl von Tasten auf, mittels derer der Benutzer die PIN an der Kartenleseeinrichtung eingeben kann.

In einer weiteren bevorzugten Ausführungsform des erfindungsgemäßen Systems weist die Kartenleseeinrichtung eine Computertastatur auf, beispielsweise sind eine Kartenleseeinrichtung und eine Computertastatur in einem gemeinsamen Gehäuse zusammengefasst. Solange keine PIN-Eingabe erforderlich ist, kann der Kartenleseteil der Kartenleseeinrichtung mit Computertastatur deaktiviert bleiben, während der Tastaturteil wie eine herkömmliche Computertastatur ohne Kartenleseteil funktioniert. Erst wenn von einem Benutzerprogramm eine PIN-Eingabe angefordert wird, wird der Kartenleseteil aktiviert.

In einer besonders bevorzugten Ausführungsform des erfindungsgemäßen Systems kann während der Eingabe der PIN zumindest das alphanumerische Tastenfeld des Tastaturteils der Kartenleseeinrichtung mit Computertastatur deaktiviert werden, besonders bevorzugt können auch andere Tastenfelder des Tastaturteils deaktiviert werden, wie z.B. die Funktionstasten oder die Cursor-Steuertasten. Der numerische Ziffernblock, der nicht deaktiviert wird, kommuniziert dann nur noch mit dem Kartenleseteil, um die PIN-Eingabe zu ermöglichen. Nach Abschluss der PIN-Eingabe wird das alphanumerische Tastenfeld wieder aktiviert und der Tastaturteil kann wieder normal benutzt werden.

In einer weiteren bevorzugten Ausführungsform des erfindungsgemäßen Systems weist die Kartenleseeinrichtung Mittel zum Übermitteln der an der Kartenleseeinrichtung betätigten Tasten an das PIN-Eingabeprogramm auf dem Computersystem auf. Dabei können die Mittel zum Übermitteln der betätigten Tasten entweder übermitteln, welche Taste betätigt wurde, oder lediglich, dass eine Taste betätigt wurde. Beispielsweise kann bei einer Betätigung einer Zifferntaste übermittelt werden, dass eine Zifferntaste betätigt wurde, aber nicht welche, während bei einer "Bestätigen"-Taste oder einer "Abbrechen"-Taste auch übermittelt wird, welche Taste betätigt wurde.

Üblicherweise beginnt der Vorgang der Verifizierung der PIN, nachdem der Benutzer die "Bestätigen"-Taste gedrückt hat. Alternativ kann mit der Verifizierung aber auch ohne das Betätigen einer "Bestätigen"-Taste begonnen werden, z.B. nach einem Timeout oder nach dem Erreichen der maximalen PIN-Eingabelänge.

In einer weiteren bevorzugten Ausführungsform des erfindungsgemäßen Systems weist die Kartenleseeinrichtung Mittel zum Übermitteln der eingegebenen Ziffern der PIN an die Chipkarte auf. Hierzu werden beispielsweise die eingegebenen Ziffern der PIN in ein Kommando eingesetzt, welches zum Vergleich der eingegebenen Ziffern mit der auf der in die Kartenleseeinrichtung eingesetzten Chipkarte geschützt (z.B. verschlüsselt) gespeicherten PIN an die Chipkarte gesendet wird.

In einer weiteren bevorzugten Ausführungsform des erfindungsgemäßen Systems weist die Kartenleseeinrichtung Mittel zum Übermitteln eines Ergebnisses des PIN-Vergleichs an das PIN-Eingabeprogramm auf dem Computersystem auf.

Wenn das Verifizieren der eingegebenen PIN ergibt, dass die richtige PIN eingegeben wurde, kann dieses Ergebnis an das PIN-Eingabeprogramm übermittelt werden und dem Benutzer kann durch das PIN-Eingabeprogramm bestätigt werden, dass er die richtige PIN eingegeben hat.

Wenn das Verifizieren der eingegebenen PIN ergibt, dass die falsche PIN eingegeben wurde, kann dieses Ergebnis an das PIN-Eingabeprogramm übermittelt werden und der Benutzer kann durch das PIN-Eingabeprogramm aufgefordert werden, die PIN-Eingabe zu wiederholen.

In einer weiteren bevorzugten Ausführungsform des erfindungsgemäßen Systems weist die Kartenleseeinrichtung Mittel zum Übermitteln eines Ergebnisses des PIN-Vergleichs an ein Benutzerprogramm auf dem Computersystem auf.

Wenn das Verifizieren der eingegebenen PIN ergibt, dass die richtige PIN eingegeben wurde, kann dieses Ergebnis an das Benutzerprogramm, das die PIN-Eingabe angefordert hat, übermittelt werden, und das Benutzerprogramm kann mit dem dafür vorgesehenen Ablauf fortfahren.

Wenn das Verifizieren der eingegebenen PIN ergibt, dass die falsche PIN eingegeben wurde, kann dieses Ergebnis an das Benutzerprogramm, das die PIN-Eingabe angefordert hat, übermittelt werden, und das Benutzerprogramm kann mit dem dafür vorgesehenen Ablauf fortfahren, beispielsweise auf eine erneute Eingabe der PIN warten.

Diese Mittel zum Übermitteln eines Ergebnisses des PIN-Vergleichs an ein Benutzerprogramm auf dem Computersystem können mit dem CCID-Device identisch sein oder von ihm verschieden sein.

Die vorliegende Erfindung bezieht sich auch auf ein Verfahren zur sicheren Eingabe einer PIN, das die folgenden Schritte aufweist:
Ein auf einem Computersystem laufendes Benutzerprogramm benötigt zur weiteren Ausführung die Authentifizierung des Benutzers. Dazu fordert das Benutzerprogramm zunächst von einer Kartenleseeinrichtung eine PIN-Eingabe an.

Die Kartenleseeinrichtung, von der die PIN- Eingabe angefordert wurde, informiert dann ein PIN-Eingabeprogramm auf dem Computersystem, auf dem auch das Benutzerprogramm läuft, das die PIN-Eingabe angefordert hat. Dieses PIN-Eingabeprogramm dient dazu, den Benutzer mittels Ausgaben auf dem Bildschirm des Computersystems durch den Vorgang der PIN-Eingabe zu führen. Somit kann für die PIN-Eingabe auch eine Kartenleseeinrichtung ohne eigenes Display (d.h. eine Kartenleseeinrichtung der Sicherheitsklasse 2) verwendet werden. Aber auch Kartenleseeinrichtungen mit einem integrierten Display (d.h. Kartenleseeinrichtungen der Sicherheitsklasse 3) können verwendet werden, wobei dann die Kommunikation mit dem Benutzer nicht über das Display der Kartenleseeinrichtung erfolgt, sondern über den Bildschirm eines Computersystems, an das die Kartenleseeinrichtung angeschlossen wird.

Das PIN-Eingabeprogramm stellt dann einen Eingabedialog auf dem Bildschirm des Computersystems dar, um den Benutzer durch den Vorgang der PIN-Eingabe zu führen.

Die vom Benutzer eingegebenen Ziffern werden dann durch die Chipkarte verifiziert, indem die eingegebenen Ziffern mit der auf der in die Kartenleseeinrichtung eingesetzten Chipkarte geschützt (z.B. verschlüsselt) gespeicherten PIN verglichen werden. Hierzu werden beispielsweise die eingegebenen Ziffern der PIN in ein Kommando eingesetzt, welches an die Chipkarte gesendet wird.

Das PIN-Eingabeprogramm, das den Benutzer durch den Vorgang der PIN-Eingabe führt, und das Benutzerprogramm, das die PIN-Eingabe anfordert, sind voneinander unabhängige Programme. Insbesondere findet zwischen dem PIN-Eingabeprogramm und dem Benutzerprogramm keine direkte Kommunikation statt. Stattdessen kommunizieren sowohl das PIN-Eingabeprogramm als auch das Benutzerprogramm mit der Kartenleseeinrichtung.

In einer bevorzugten Ausführungsform des erfindungsgemäßen Verfahrens erfolgt das Anfordern der PIN-Eingabe von der Kartenleseeinrichtung durch den Aufruf der leicht zu implementierenden Funktion "VERIFY_PIN_DIRECT" durch das Benutzerprogramm oder ein vom Benutzerprogramm aufgerufenes Programm. Es ist dann nicht erforderlich, dass das Benutzerprogramm beispielsweise an herstellerspezifische Serviceprovider angepasst wird.

Anders als bei dem herkömmlichen Verfahren, das mit einem Aufruf der VERIFY_PIN_DIRECT-Funktion funktioniert, erhält der Benutzer bei dem erfindungsgemäßen Verfahren eine Rückmeldung durch das PIN-Eingabeprogramm und kann von diesem durch die PIN-Eingabe geführt werden.

In einer weiteren bevorzugten Ausführungsform des erfindungsgemäßen Verfahrens weist das Verfahren weiter den Schritt des Informierens eines HID-Devices der Kartenleseeinrichtung durch ein CCID-Device der Kartenleseeinrichtung auf.

In einer weiteren bevorzugten Ausführungsform des erfindungsgemäßen Verfahrens erfolgt das Informieren des PIN-Eingabeprogramms auf dem Computersystem durch das HID-Device der Kartenleseeinrichtung.

In einer weiteren bevorzugten Ausführungsform des erfindungsgemäßen Verfahrens weist das Verfahren weiter den Schritt des Übermittelns der an der Kartenleseeinrichtung betätigten Tasten an das PIN-Eingabeprogramm auf dem Computersystem auf. Dabei kann entweder übermittelt werden, welche Taste betätigt wurde, oder lediglich, dass eine Taste betätigt wurde. Beispielsweise kann bei einer Betätigung einer Zifferntaste übermittelt werden, dass eine Zifferntaste betätigt wurde, aber nicht welche, während bei einer "Bestätigen"-Taste oder einer "Abbrechen"-Taste auch übermittelt wird, welche Taste betätigt wurde.

Üblicherweise beginnt der Vorgang der Verifizierung der PIN, nachdem der Benutzer die "Bestätigen"-Taste gedrückt hat. Alternativ kann mit der Verifizierung aber auch ohne das Betätigen einer "Bestätigen"-Taste begonnen werden, z.B. nach einem Timeout oder nach dem Erreichen der maximalen PIN-Eingabelänge.

In einer weiteren bevorzugten Ausführungsform des erfindungsgemäßen Verfahrens weist das Verfahren weiter den Schritt des Übermittelns des Ergebnisses des PIN-Vergleichs, der auf der Chipkarte durchgeführt wurde, durch die Kartenleseeinrichtung an das PIN-Eingabeprogramm auf dem Computersystem auf.

In einer weiteren bevorzugten Ausführungsform des erfindungsgemäßen Verfahrens erfolgt das Übermitteln des Ergebnisses des PIN-Vergleichs an das PIN-Eingabeprogramm auf dem Computersystem durch das HID-Device der Kartenleseeinrichtung.

Wenn das Verifizieren der eingegebenen PIN ergibt, dass die richtige PIN eingegeben wurde, kann dieses Ergebnis an das PIN-Eingabeprogramm übermittelt werden und dem Benutzer kann durch das PIN-Eingabeprogramm bestätigt werden, dass er die richtige PIN eingegeben hat.

Wenn das Verifizieren der eingegebenen PIN ergibt, dass die falsche PIN eingegeben wurde, kann dieses Ergebnis an das PIN-Eingabeprogramm übermittelt werden und der Benutzer kann durch das PIN-Eingabeprogramm aufgefordert werden, die PIN-Eingabe zu wiederholen.

In einer weiteren bevorzugten Ausführungsform des erfindungsgemäßen Verfahrens weist das Verfahren weiter den Schritt des Übermittelns des Ergebnisses des PIN-Vergleichs, der auf der Chipkarte durchgeführt wurde, durch die Kartenleseeinrichtung an das Benutzerprogramm auf dem Computersystem auf.

Wenn das Verifizieren der eingegebenen PIN ergibt, dass die richtige PIN eingegeben wurde, kann dieses Ergebnis an das Benutzerprogramm, das die PIN-Eingabe angefordert hat, übermittelt werden, und das Benutzerprogramm kann mit dem dafür vorgesehenen Ablauf fortfahren.

Wenn das Verifizieren der eingegebenen PIN ergibt, dass die falsche PIN eingegeben wurde, kann dieses Ergebnis an das Benutzerprogramm, das die PIN-Eingabe angefordert hat, übermittelt werden, und das Benutzerprogramm kann mit dem dafür vorgesehenen Ablauf fortfahren, beispielsweise auf eine erneute Eingabe der PIN warten.

In einer weiteren bevorzugten Ausführungsform des erfindungsgemäßen Verfahrens erfolgt das Übermitteln des Ergebnisses des Verifizierens der eingegebenen Ziffern der PIN an das Benutzerprogramm auf dem Computersystem durch das CCID-Device der Kartenleseeinrichtung.

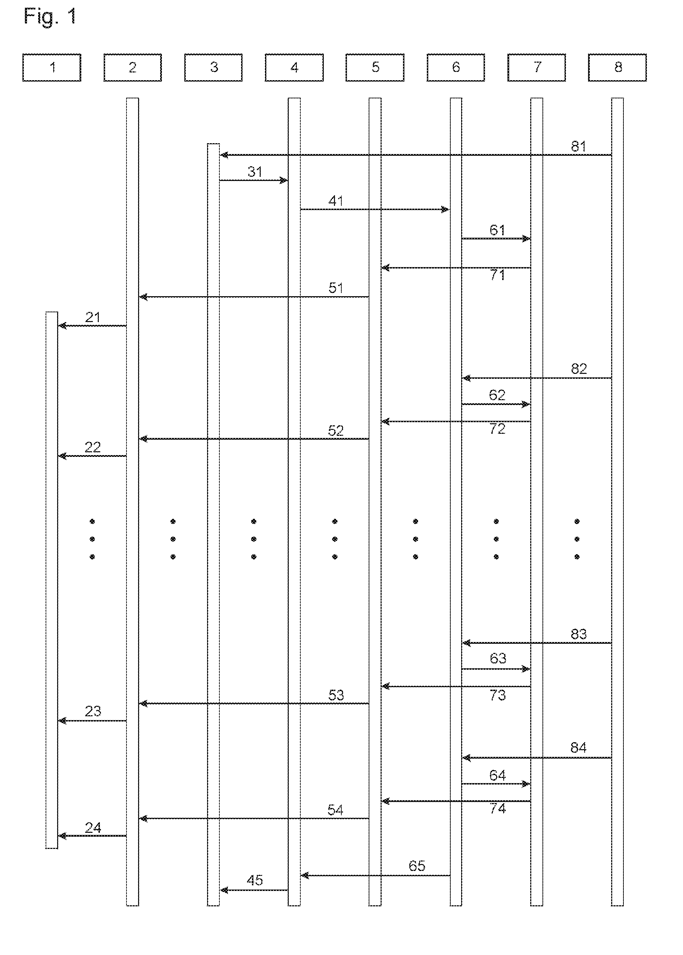

Anhand der Zeichnung wird die Erfindung nachstehend eingehend erläutert. Fig. 1 zeigt eine schematische Darstellung des Ablaufs einer bevorzugten Ausführungsform des erfindungsgemäßen Verfahrens.

Aus der Darstellung gemäß Fig. 1 ist der schematische Ablauf einer bevorzugten Ausführungsform des erfindungsgemäßen Verfahrens ersichtlich. Die am Verfahren beteiligten Elemente werden durch die Rechtecke am oberen Ende der Fig. 1 dargestellt. Dabei stellt dar:
1 die grafische Benutzeroberfläche (GUI, *graphical user interface*) des PIN-Eingabeprogramms (*frontend*);
2 den Teil des PIN-Eingabeprogramms, der nicht zur grafischen Benutzeroberfläche gehört (*backend*)*;*
3 das Benutzerprogramm;
4 den CCID-Treiber;
5 den HID-Treiber;
6 das CCID-Device;
7 das HID-Device; und
8 den Benutzer.

Es sind also die Elemente (1) bis (5) Programme oder Programmkomponenten, die auf einem Computersystem ablaufen. Während die Elemente (1) bis (3) im Usermode ablaufen, laufen die Elemente (4) und (5) - also die beiden Treiber, die üblicherweise vom Betriebssystem bereitgestellt werden - im Kernelmode.

Elemente (6) und (7) - die beiden Devices - sind logische Komponenten einer Kartenleseeinrichtung, die an das Computersystem angeschlossen ist, beispielsweise über eine USB-Schnittstelle.

Element (8) stellt den Benutzer des Computersystems und der Kartenleseeinrichtung dar.

Elemente (1) und (2) *- backend* und *frontend* des PIN-Eingabeprogramms - stellen somit ein virtuelles Display der Kartenleseeinrichtung dar.

Die unter den Rechtecken (1) bis (8) angeordneten länglichen Balken stellen die Dauer der Aktivität des entsprechenden Elements dar. Hieraus wird deutlich, dass sowohl das *backend* des PIN-Eingabeprogramms als auch die beiden Treiber auf dem Computersystem zumindest dann laufen, wenn eine Kartenleseeinrichtung mit dem Computersystem verbunden ist, während das Benutzerprogramm (3) erst durch den Benutzer (8) aufgerufen wird.

Bei Schritt (81) ruft der Benutzer (8) ein Benutzerprogramm (3) auf dem Computersystem auf, beispielsweise über die grafische Benutzeroberfläche des Betriebssystems oder über eine Kommandozeile. Das Benutzerprogramm (3) kann beispielsweise ein Programm für das Internetbanking sein. Um sich auf dem Server der Bank einloggen zu können, muss der Benutzer seine passende Chipkarte in die Kartenleseeinrichtung einsetzen und sich durch die Eingabe der dazugehörigen PIN authentifizieren.

Dazu fordert das Benutzerprogramm (3) bei Schritt (31) mittels der Funktion VERIFY_PIN_DIRECT über den auf dem Computersystem laufenden CCID-Treiber (4) die Eingabe der PIN an.

Der CCID-Treiber (4) übermittelt die Funktion VERIFY_PIN_DIRECT an das CCID-Device (6) der Kartenleseeinrichtung. Die Kartenleseeinrichtung ist daraufhin bereit, die Eingabe der Ziffern durch den Benutzer (8) entgegenzunehmen. Allerdings ist dies für den Benutzer (8) nicht ersichtlich, wenn die Kartenleseeinrichtung kein eigenes Display aufweist.

Um den Benutzer (8) darauf hinzuweisen, dass er nun die Ziffern der PIN eingeben kann, informiert das CCID-Device (6) der Kartenleseeinrichtung bei Schritt (61) ein HID-Device (7) der Kartenleseeinrichtung über den Start der sicheren PIN-Eingabe.

Das HID-Device (7) der Kartenleseeinrichtung übermittelt bei Schritt (71) die Information OpenDialog an den HID-Treiber (5) auf dem Computersystem, und der HID-Treiber (5) leitet diese Information bei Schritt (51) weiter an das *backend* (2) des PIN-Eingabeprogramms. Das *backend* (2) öffnet dann bei Schritt (21) das *frontend* (1), d.h. die GUI des PIN-Eingabeprogramms.

Somit kann dem Benutzer (8) auf dem Bildschirm des Computersystems angezeigt werden, dass die Kartenleseeinrichtung bereit ist, die Eingabe des Benutzers (8) entgegenzunehmen.

Die von der Kartenleseeinrichtung entgegengenommenen Ziffern werden in ein Kommando eingesetzt und an die Chipkarte übermittelt, um dort mit der auf der Chipkarte geschützt gespeicherten PIN verglichen zu werden.

Der Benutzer (8) gibt bei Schritt (82) die erste Ziffer der PIN ein. Diese Eingabe wird vom CCID-Device (6) entgegengenommen. Das CCID-Device (6) übermittelt eine Information über die gedrückte Taste bei Schritt (62) an das HID-Device (7), welches diese Information bei Schritt (72) an den HID-Treiber (5) übermittelt.

Dieser übermittelt die Information über die gedrückte Taste bei Schritt (52) an das *backend* (2) des PIN-Eingabeprogramms, welches bei Schritt (22) eine entsprechende Ausgabe über die GUI (1) veranlasst. Diese Ausgabe kann beispielsweise darin bestehen, dass für eine gedrückte Zifferntaste ein Asterisk (*) auf dem Bildschirm des Computersystems dargestellt wird.

Die Eingabe weiterer Ziffern der PIN erfolgt analog der Eingabe der ersten Ziffer, bis die Eingabe der letzten Ziffern bei Schritt (83) mit den Verfahrensschritten (63), (73), (53), und (23) analog den Schritten (62), (72), (52), und (22) verarbeitet wird.

Der Benutzer (8) betätigt dann bei Schritt (84) die "Bestätigen"-Taste, um die PIN-Eingabe abzuschließen. Diese Eingabe wird wie die Eingabe der Ziffern vom CCID-Device (6) entgegengenommen. Das CCID-Device (6) übermittelt eine Information über das Drücken der "Bestätigen"-Taste bei Schritt (64) an das HID-Device (7), welches diese Information bei Schritt (74) an den HID-Treiber (5) übermittelt.

Dieser übermittelt die Information über das Drücken der "Bestätigen"-Taste bei Schritt (54) an das *backend* (2) des PIN-Eingabeprogramms, welches bei Schritt (24) die GUI (1) des PIN-Eingabeprogramms beendet.

Nach dem Drücken der "Bestätigen"-Taste verifiziert die Chipkarte die eingegebene PIN. Das CCID-Device (6) informiert nun bei Schritt (64) das HID-Device (7).

Das HID-Device (7) informiert bei Schritt (74) den HID-Treiber (5) darüber, dass die PIN-Eingabe abgeschlossen ist. Der HID-Treiber (5) wiederum informiert das *backend* (2) des PIN-Eingabeprogramms bei Schritt (54) über die abgeschlossene PIN-Eingabe.

Das CCID-Device (6) informiert nun bei Schritt (65) den CCID-Treiber (4) und dieser bei Schritt (45) das Benutzerprogramm (3) darüber, dass die PIN-Eingabe abgeschlossen ist.

Die Schrittketten (64, 74, 54, 24) sowie (65,45) können gleichzeitig oder in beliebiger Reihenfolge ablaufen.

Bei Betätigen einer anderen Funktionstaste als der "Bestätigen"-Taste, wie z.B. der "Abbrechen"-Taste, ändert sich nichts an dem erfindungsgemäßen Verfahren.

Bei Betätigen einer Funktionstaste "Zurück" wird die Ausgabe der letzten betätigten Ziffer im *frontend* (2) gelöscht, bzw. wird die letzte betätigte Ziffer im Speicher des CCID-Devices gelöscht.

Das Benutzerprogramm (3) fährt nach Schritt (45) entsprechend dem Ergebnis der Verifizierung der PIN-Eingabe fort, ermöglicht also beispielsweise bei richtiger PIN-Eingabe dem Benutzer (8) den Zugriff auf sein Konto über das Internet, oder verhindert diesen Zugriff bei falscher PIN-Eingabe.

Bei diesem Verfahren stellt sich als vorteilhaft dar, dass keine Schleife in einem Programm ständig eine Abfrage startet, ob eine Taste der Kartenleseeinrichtung gedrückt wurde (Polling), sondern es wird lediglich auf das Betätigen einer Taste hin ein Befehl zum Aktualisieren der grafischen Benutzeroberfläche ausgeführt.

### Bezugszeichenliste

- 1: grafische Benutzeroberfläche des PIN-Eingabeprogramms (*fronend*)
- 2: Teil des PIN-Eingabeprogramms, der nicht zur grafischen Benutzeroberfläche gehört (*backend*)
- 3: Benutzerprogramm
- 4: CCID-Treiber
- 5: HID-Treiber
- 6: CCID-Device
- 7: HID-Device
- 8: Benutzer

## Patentansprüche

1. System zur sicheren Eingabe einer PIN, aufweisend eine Kartenleseeinrichtung und ein PIN-Eingabeprogramm (1, 2) zur Ausführung auf einem Computersystem,
**dadurch gekennzeichnet, dass**
die Kartenleseeinrichtung ein CCID-Device (6) und Mittel zum Informieren des PIN-Eingabeprogramms (1, 2) auf dem Computersystem aufweist, wobei die Mittel zum Informieren des PIN-Eingabeprogramms auf dem Computersystem ein HID-Device (7) aufweisen, und **dass** die Kartenleseeinrichtung Mittel zum Informieren des HID-Devices (7) durch das CCID-Device (6) aufweist.

2. System nach einem der vorangegangenen Ansprüche, wobei die Kartenleseeinrichtung eine Mehrzahl von Tasten aufweist.

3. System nach einem der vorangegangenen Ansprüche, wobei die Kartenleseeinrichtung eine Computertastatur aufweist.

4. System nach Anspruch 3, wobei zumindest das alphanumerische Tastenfeld der Computertastatur deaktivierbar ist und wobei die Kartenleseeinrichtung Mittel zur Kommunikation mit einem numerischen Tastenfeld der Computertastatur aufweist.

5. System nach einem der Ansprüche 2 - 4, wobei die Kartenleseeinrichtung Mittel zum Übermitteln der an der Kartenleseeinrichtung betätigten Tasten an das PIN-Eingabeprogramm (1, 2) auf dem Computersystem aufweist.

6. System nach einem der Ansprüche 2 - 4, wobei die Kartenleseeinrichtung Mittel zum Übermitteln der an der Kartenleseeinrichtung betätigten Tasten an eine in die Kartenleseeinrichtung eingesetzte Chipkarte aufweist.

7. System nach einem der vorangegangenen Ansprüche, wobei die Kartenleseeinrichtung Mittel zum Übermitteln eines Ergebnisses einer Verifikation der eingegebenen PIN auf einer in die Kartenleseeinrichtung eingesetzten Chipkarte durch die Kartenleseeinrichtung an das PIN-Eingabeprogramm (1, 2) auf dem Computersystem aufweist.

8. System nach einem der vorangegangenen Ansprüche, wobei die Kartenleseeinrichtung Mittel zum Übermitteln eines Ergebnisses einer Verifikation der eingegebenen PIN auf einer in die Kartenleseeinrichtung eingesetzten Chipkarte durch die Kartenleseeinrichtung an ein Benutzerprogramm (3) auf dem Computersystem aufweist.

9. Verfahren zur sicheren Eingabe einer PIN, aufweisend die Schritte:
- Anfordern (31) einer PIN-Eingabe von einer Kartenleseeinrichtung durch ein auf einem Computersystem laufendes Benutzerprogramm (3);
- Informieren (61) eines HID-Devices (7) der Kartenleseeinrichtung durch ein CCID-Device (6) der Kartenleseeinrichtung;
- Informieren (71) eines PIN-Eingabeprogramms (1, 2) auf dem Computersystem durch das HID-Device (7) der Kartenleseeinrichtung;
- Darstellen eines Eingabedialogs (1) durch das PIN-Eingabeprogramm (1, 2); und
- Verifizieren der eingegebenen Ziffern der PIN durch eine in die Kartenleseeinrichtung eingesetzte Chipkarte.

10. Verfahren nach Anspruch 9, wobei das Anfordern (31) der PIN-Eingabe von der Kartenleseeinrichtung durch den Aufruf der Funktion "VERIFY_PIN_DIRECT" erfolgt.

11. Verfahren nach einem der Ansprüche 9 oder 10, wobei das Verfahren weiter den Schritt des Übermittelns (72, 52; 73, 53) der an der Kartenleseeinrichtung betätigten Tasten an das PIN-Eingabeprogramm (1, 2) auf dem Computersystem aufweist.

12. Verfahren nach einem der Ansprüche 9 - 11, wobei das Verfahren weiter den Schritt des Übermittelns (74, 54) des Ergebnisses des Verifizierens der eingegebenen Ziffern der PIN auf einer in die Kartenleseeinrichtung eingesetzten Chipkarte durch die Kartenleseeinrichtung an das PIN-Eingabeprogramm (1, 2) auf dem Computersystem aufweist.

13. Verfahren nach Anspruch 12, wobei das Übermitteln (74, 54) des Ergebnisses des Verifizierens der eingegebenen Ziffern der PIN an das PIN-Eingabeprogramm (1, 2) auf dem Computersystem durch das HID-Device (7) der Kartenleseeinrichtung erfolgt.

14. Verfahren nach einem der Ansprüche 9 - 13, wobei das Verfahren weiter den Schritt des Übermittelns (65, 45) des Ergebnisses des Verifizierens der eingegebenen Ziffern der PIN auf einer in die Kartenleseeinrichtung eingesetzten Chipkarte durch die Kartenleseeinrichtung an das Benutzerprogramm (3) auf dem Computersystem aufweist.

15. Verfahren nach Anspruch 14, wobei das Übermitteln (65, 45) des Ergebnisses des Verifizierens der eingegebenen Ziffern der PIN an das Benutzerprogramm (3) auf dem Computersystem durch das CCID-Device (6) der Kartenleseeinrichtung erfolgt.
